(19) **Europäisches Patentamt European Patent Office Office européen des brevets**

(11) **EP 2 781 976 B1**

(12) **FASCICULE DE BREVET EUROPEEN**

(45) Date de publication et mention
de la délivrance du brevet:
**01.03.2017 Bulletin 2017/09**

(51) Int Cl.:
***G05B 15/02*** *(2006.01)*

(21) Numéro de dépôt: **14305383.3**

(22) Date de dépôt: **19.03.2014**

(54) **Procédé et ensemble pour l'évaluation et l'optimisation des consommations d'énergie pour le chauffage et/ou la climatisation**

Verfahren und Einheit zum Abschätzen und zur Optimierung des Energieverbrauchs zum Heizen und/oder Kühlen mit der Klimaanlage

Method and arrangement for assessing and optimising energy consumption for heating and/or air conditioning

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.03.2013 FR 1352424**

(43) Date de publication de la demande:
**24.09.2014 Bulletin 2014/39**

(73) Titulaire: **Euro Protection Surveillance (Société par Actions Simplifiée) 67100 Strasbourg (FR)**

(72) Inventeurs:
- **Duplessis, Bruno 75011 PARIS (FR)**
- **Haessler, François 67100 STRASBOURG (FR)**

(74) Mandataire: **Nuss, Laurent et al Cabinet Nuss 10, rue Jacques Kablé 67080 Strasbourg Cedex (FR)**

(56) Documents cités:
WO-A1-2011/121299      GB-A- 2 448 896
US-A1- 2011 125 329      US-A1- 2012 066 168

**Description**

La présente invention concerne le domaine du diagnostic thermique et énergétique d'un logement ou bâtiment, à titre d'information à destination des personnes intéressées, éventuellement assortie de recommandations ou de propositions d'amélioration du rapport [confort de vie/consommation énergétique] pour le logement ou le bâtiment concerné.

Dans ce contexte, l'invention a pour objet un procédé d'évaluation et d'optimisation des consommations d'énergie pour le chauffage et/ou la climatisation, ainsi qu'un ensemble pour sa mise en oeuvre.

De nombreux procédés de diagnostics de bâtiments en vue d'une évaluation thermique et/ou énergétique ont déjà été proposés.

De manière quasi-généralisée, ces prestations sont réalisées par des personnels qualifiés qui effectuent leurs constatations, mesures et relevés de manière ponctuelle in situ (donc en se rendant sur place), les consommations d'énergie étant généralement appréciées de manière globale, par exemple à l'aide de factures.

On connaît, par ailleurs, des procédés plus sophistiqués et plus pointus, mais nécessitant la mise en place d'équipements spécifiques et donc généralement l'intervention de personnels spécialisés sur place, ainsi qu'éventuellement des opérations d'installation complexes.

La présente invention a pour but de proposer un procédé et un dispositif pour réaliser les prestations précitées, partiellement ou totalement, en réalisant une évaluation automatique sur une période temporelle significative et en situation réelle des consommations énergétiques et des variations de température, et plus généralement des habitudes des occupants.

Par les documents US 2011/125329, GB 2 448 896 et WO 2011/121299, on connaît déjà des procédés de pilotage automatique d'installations de chauffage mettant en oeuvre les opérations mentionnées dans le préambule de la revendication 1 annexée.

Néanmoins, la pertinence et la fiabilité des données utilisées dans ces procédés connus sont sujet à caution (indicateurs indirects) et la manière dont ces données seraient exploitées n'est pas spécifiquement indiquée.

En outre, les procédés précités utilisent des moyens matériels différents pour leur mise en oeuvre, d'où il résulte une construction complexe et l'exploitation de source de données correspondant à des moyens matériels distincts et appartenant à des réseaux séparés.

Enfin, ces procédés connus ne laissent à l'utilisateur aucune liberté de décision et exploitent systématiquement un modèle prédictif.

L'invention a notamment pour but de surmonter au moins certaines des limitations précitées.

Ainsi, l'invention visera par exemple à utiliser au maximum des équipements déjà existants, à limiter ou à éviter tout déplacement de personnel qualifié, à autoriser une répétition des prestations sans nécessiter aucune intervention additionnelle, à permettre une adaptation aisée du degré de sophistication des prestations fournies aux désirs de l'utilisateur et au niveau d'équipement existant ou souhaité par ce dernier et/ou à fournir à l'utilisateur des informations ou des recommandations lui permettant, selon son choix, directement ou indirectement, de réduire sa consommation énergétique.

De plus, l'acquisition et le traitement des données devraient être réalisés de manière automatisée, par une ressource centralisée et commune à de nombreux utilisateurs.

Enfin, l'invention cherchera à prétraiter les données brutes collectées et à les intégrer sous forme de paramètres significatifs globaux, plus facilement exploitables.

En vue d'atteindre au moins les buts essentiels mentionnés ci-dessus, le procédé selon l'invention fait état des caractéristiques de la partie caractérisante de la revendication 1.

L'invention a également pour objet un ensemble ou dispositif pour la mise en oeuvre de ce procédé.

L'invention sera mieux comprise, grâce à la description ci-après, qui se rapporte à des modes de réalisation préférés, plutôt en relation avec le chauffage, donnés à titre d'exemples non limitatifs, et expliqués avec référence aux dessins schématiques annexés, dans lesquels :

La figure 1 est une représentation symbolique d'un ensemble pour la mise en oeuvre d'un procédé selon l'invention ;

Les figures 2A et 2B illustrent les variations de température intérieure et de consommation d'énergie dans le temps, dans le cas d'un chauffage nocturne permanent et dans le cas d'un chauffage avec intermittence nocturne ;

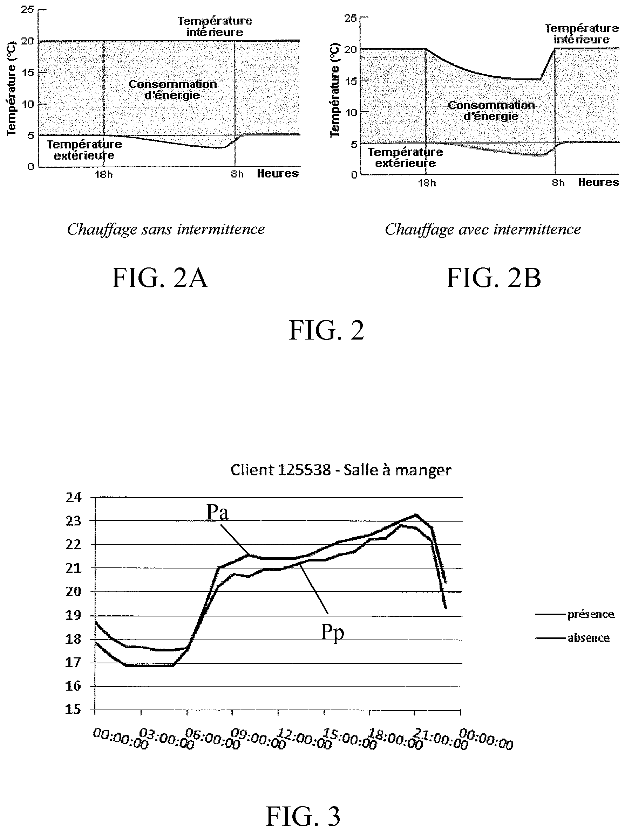

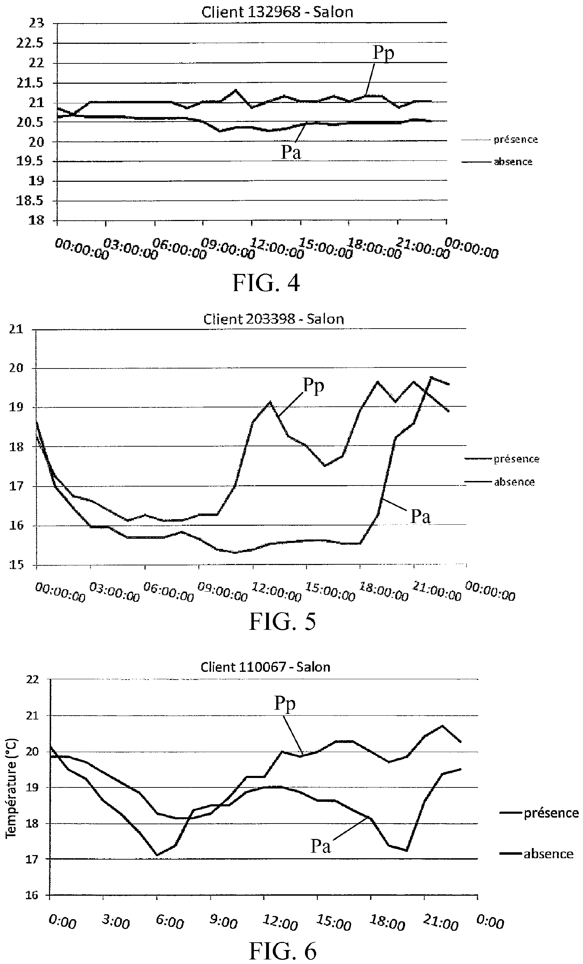

Les figures 3 à 6 représentent des profils de température horaires pour différentes pièces d'un logement en présence et en l'absence d'occupant(s), illustrant différents usages du chauffage : figure 3 - exemple de chauffage avec absence de différentiation entre jours d'absence et jours de présence (chauffage identique dans les deux cas) ; figure 4 - exemple de chauffage avec absence d'intermittence journalière (absence d'arrêt ou de réduction du chauffage durant les périodes nocturnes et absence de différentiation entre jours d'absence et jours de présence); figure 5 et figure 6 - exemples d'image a priori appropriée du chauffage;

Les figures 7A à 7D illustrent respectivement, en relation avec une consigne de température constante et élevée, les besoins de chauffage (figure 7A), l'irradiation solaire sur le(s) mur(s) d'un logement (figure 7B), la température externe (figure 7C) et le scénario d'occupation du logement (figure 7D) ;

Les figures 8A à 8D illustrent, pour le même logement que les figures 7, respectivement, en relation avec une consigne de température variable, les besoins de chauffage (figure 8A), l'irradiation solaire sur le(s) mur(s) du logement (figure 8B), la température externe (figure 8C) et le scénario d'occupation du logement (figure 8D) ;

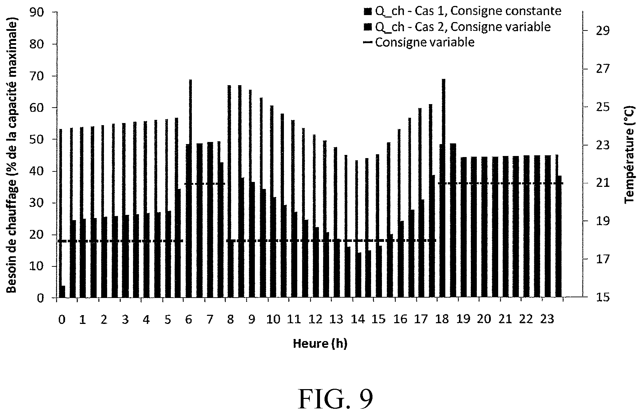

La figure 9 illustre, par superposition des figures 7A et 8A, la différence des besoins de chauffage entre les deux pratiques de chauffage des figures 7 et 8 ;

La figure 10 est une représentation symbolique d'un modèle thermique simplifié (analogie électrique) pouvant être exploité dans le cadre du procédé selon l'invention, et

La figure 11 est un schéma synoptique illustrant les différentes options opératoires possibles pour le procédé selon l'invention, en fonction notamment des données disponibles et collectées.

L'invention concerne, en premier lieu, un procédé pour l'indication, l'évaluation et l'optimisation des consommations d'énergie pour le chauffage et/ou la climatisation d'un logement 1 ou d'un bâtiment d'habitation analogue.

Le logement 1 ou analogue est pourvu, préférentiellement dans chaque pièce de vie (pièces à vivre + chambres), d'un moyen de chauffage et/ou de climatisation, de capteurs de température 2 et de détecteurs de présence et/ou de mouvement 3 et comportant des moyens 5 de récupération et de transmission, préférentiellement de manière répétitive à intervalles réguliers, de données délivrées par les capteurs 2 et les détecteurs 3 précités, ainsi que par les organes de commande 4 des moyens de chauffage et/ou de climatisation.

Conformément à l'invention, le procédé consiste à mesurer la température de l'air, au moins pour certaines pièces, par l'intermédiaire de capteurs 2 intégrés dans des détecteurs de présence et/ou de mouvement 3, à récupérer et à transmettre, à intervalles réguliers, les données fournies par les capteurs 2, les détecteurs 3 et/ou les organes 4, par l'intermédiaire d'une centrale d'alarme 5, de surveillance ou analogue formant passerelle et reliée, d'une part, aux détecteurs 3, capteurs 2 et organes 4 précités et, d'autre part, à des moyens 6 de transfert à distance, préférentiellement sécurisé, à intégrer ensuite ces données collectées sur au moins une période d'observation de plusieurs jours, préférentiellement de plusieurs semaines, et à les exploiter au niveau d'un système distant 7 de traitement, en particulier en réalisant une caractérisation des habitudes d'usage du chauffage et/ou de la climatisation et/ou au moins une analyse corrélative des différents types de données collectées simultanément, et enfin à mettre à disposition les résultats du traitement, éventuellement associés à une évaluation qualitative et performancielle de l'utilisation de l'énergie, une recommandation de modification des habitudes de chauffage ou de climatisation et/ou des propositions d'optimisation de la consommation d'énergie, pour le logement 1 ou analogue concerné, ou pour au moins certaines des pièces de vie de ce dernier, préférentiellement avec prise en compte de critères de confort pour les occupants.

Ainsi, le procédé utilise avantageusement un équipement existant chez l'utilisateur pour la collecte et la transmission des informations.

De plus, les données collectées et transmises pour traitement combinent au moins deux types d'informations relevés de manière simultanée, à savoir une information sur la température de l'air de la pièce concernée du logement 1 et une information relative à l'occupation de ce dernier ou de certaines pièces au moins (présence ou absence d'occupant), en fonction de l'activation ou non du système d'alarme ou de surveillance.

Les capteurs 2 peuvent, ou non, être tous intégrés aux détecteurs 3 du système d'alarme, ce en fonction du nombre et des localisations respectives des deux types de composants. Ainsi, en plus des capteurs de température 2 intégrés aux détecteurs 3, les moyens de mesure peuvent également comprendre des capteurs de température additionnels séparés, non intégrés, faisant éventuellement partie d'équipements déjà installés dans le logement 1.

Les températures des différentes pièces équipées peuvent être relevées avec un pas temporel d'une heure, ou éventuellement d'une demi-heure, et les valeurs mesurées être stockées temporairement au niveau des capteurs 2 ou détecteurs 3 concernés, ou au niveau de la centrale 5, pour un transfert groupé toutes les 24 heures.

Avantageusement, trois niveaux de services, du plus basique au plus sophistiqué, peuvent être proposés à l'utilisateur, en fonction de ses souhaits, de l'équipement installé et de la richesse des informations recueillies au niveau du logement 1 :

- montrer à l'utilisateur son usage habituel du chauffage et/ou de la climatisation ;
- indiquer à l'utilisateur les points d'amélioration permettant des économies d'énergie ;
- proposer à l'utilisateur des solutions concrètes et immédiatement applicables d'optimisation de l'utilisation du chauffage ou de la climatisation.

Une évolution ultime du procédé selon l'invention peut éventuellement comprendre un pilotage totalement asservi et automatisé du chauffage et/ou de la climatisation.

Bien entendu, par exemple dans le cas du chauffage, l'application des améliorations dépend également du type de chauffage installé (centralisé, modulaire, ...) et de sa nature (gaz, fioul, électrique, à granulés, ...), autorisant des modifications plus ou moins localisées et fractionnées, et avec plus ou moins d'inertie.

Il en est de même dans le cas de la climatisation en terme de nature (climatisation à air pulsé, plancher chauffant, ...) et de type (modulaire, split, ...).

En accord avec une première caractéristique du procédé, en relation avec le premier niveau de service précité, il peut être prévu, à l'aide de températures horaires moyennes $\left(T_i^p, T_i^a\right)$ calculées sur la période d'observation à partir des données collectées et traitées, à mettre en évidence la persistance des consommations d'énergie durant des phases d'inoccupation du logement 1 ou analogue et/ou de chaque ou certaines pièce(s) de vie de ce dernier.

Les températures horaires moyennes peuvent être déterminées par capteur 2 (donc par pièce de vie), ou de manière généralisée pour le logement 1. De même, l'état d'inoccupation/d'occupation peut être apprécié de manière globale (pour le logement : activation ou désactivation du système d'alarme ou de surveillance) ou de manière fragmentée (par pièce : détection ou non d'une présence et/ou de mouvements dans une pièce d'intérêt par le détecteur 3 résident).

De plus, l'inoccupation (ou de manière symétrique l'occupation) peut être considérée par heure, par tranche de plusieurs heures ou par jour (de 24 heures), ce en fonction de la prise en compte horaire ou journalière de l'information de présence ou d'absence.

Il est notamment avantageux de présenter cette information de persistance de la consommation en l'absence d'occupant sous forme graphique, par exemple sous la forme d'une ou de plusieurs courbes de variation de la température affichant également les périodes mutuellement complémentaires d'occupation et d'inoccupation du logement 1 ou de la pièce concernée.

Toujours selon l'invention, et comme le montrent les figures 3 à 6, à titre d'exemples pour des capteurs 2 installés dans des pièces de vie correspondantes, le procédé consiste à établir au moins deux profils différenciés $P_p$, $P_a$ d'évolution de la température sur une période de base ou de référence, typiquement 24 heures, à partir des températures horaires moyennes $T_i^p, , T_i^a$, préférentiellement par pièce et pour toutes les pièces équipées de détecteurs 3 et/ou de capteurs 2 connectés du logement 1 ou analogue, calculées sur la base des données collectées et affectées à l'un des deux profils Pp, $P_a$ selon que la durée d'occupation de la pièce concernée, ou du logement 1 ou analogue dans sa totalité, est inférieure ou supérieure à une ou plusieurs valeur(s) seuil, de manière à déterminer le niveau d'usage moyen du chauffage et/ou de la climatisation pour une pièce de vie donnée selon le degré d'occupation de cette dernière ou du logement 1 ou analogue, par exemple décliné en jours de présence et en jours d'absence.

Ainsi, un profil de température $P_p$, $P_a$ est constitué par la suite, sur une journée, des températures horaires moyennes calculées sur la période d'observation. En appliquant un critère de qualification d'occupation binaire (présence/absence), deux profils peuvent être générés, lesquels comportent donc 24 valeurs $T_i^p$ pour les jours de présence et 24 valeurs $T_i^a$ pour les jours d'absence. Ces valeurs peuvent être représentées visuellement, pour une interprétation aisée, sous forme de courbes temporelles (deux courbes par pièce d'intérêt : voir figures 3 à 6).

A titre d'exemple, on peut définir un jour de présence par une absence d'occupation (de la pièce ou du logement) de moins de 5 heures (sur 24 heures) et un jour de d'absence par une absence d'occupation de plus de 5 heures.

Bien entendu, il est possible de modifier cette valeur seuil d'inoccupation et également de générer, éventuellement pour une évaluation plus fine, plus de deux profils de température, tels que par exemple un profil pour une absence d'occupation de moins de 5 heures, un profil pour une absence d'occupation de 5 à 9 heures et un profil pour une absence d'occupation de plus de 9 heures.

Une première fonction du procédé selon l'invention, en relation avec un niveau de service élémentaire, consiste à mettre en évidence, sur la base des données collectées, une différence d'usage du chauffage et/ou de la climatisation entre les périodes diurnes et nocturnes, ce pour chaque pièce de vie équipée d'un capteur 2 connecté, incorporé à un détecteur 3.

A titre d'exemples d'exploitation visuelle directe des informations fournies par les profils de température binaires illustrés sur les figures 3 à 6 (visant le chauffage), on peut relever que :

- les deux profils de température de la figure 3 sont quasiment identiques d'où il résulte un usage de chauffage identique les jours d'absence et de présence (émission d'une recommandation d'une baisse du chauffage en période d'absence). Toutefois, une intermittence du chauffage est apparente pendant la nuit.
- les deux profils de température de la figure 4 sont relativement plats, indiquant une absence d'intermittence de chauffage en période nocturne (émission d'une recommandation pour la mise en place d'une telle intermittence). On peut relever un léger décalage (entre 0,5° C et 1° C) entre les deux profils indiquant un chauffage différencié entre les jours de présence et d'absence qui mériterait toutefois d'être accentué.
- les profils de température des figures 5 et 6 présentent à la fois des intermittences de chauffage nocturnes et une différenciation du mode de chauffage en fonction de l'occupation. Par conséquent, l'usage du chauffage dans ces deux cas semble a priori approprié.

En vue de disposer d'un moyen d'analyse systématique reproductible et automatisé, autorisant une quantification objective du degré de similitude/différence et donc une évaluation entre les profils de température, il peut être prévu de réaliser, au niveau du système de traitement 7 et sur la base des températures horaires moyennes $(T_i^p, T_i^a)$, une analyse des habitudes de chauffage et/ou de climatisation pour chaque pièce équipée, ce en calculant les valeurs des deux paramètres suivants :

$$D_i = \sum_{i=1}^{24} (T_i^p - T_i^a) \text{ et } D_e = \sqrt{\sum_{i=1}^{24} (T_i^p - T_i^a)^2} \, ,$$

avec $D_i$ = distance moyenne, $D_e$ = distance euclidienne, i = numéro de la tranche horaire, $T_i^p$ = température horaire moyenne pour la i$^{\text{ème}}$ tranche horaire pendant les jours de présence durant la période d'observation et $T_i^a$ = température horaire moyenne pour la i$^{\text{ème}}$ tranche horaire pendant les jours d'absence durant la période d'observation.

Un premier critère aisé permettant de confirmer une utilisation appropriée, sinon optimale, du chauffage peut consister à vérifier si la valeur de $D_i$ est strictement positive ou non ($D_j > O$ étant visé).

A titre d'exemple de mise en oeuvre pratique, une utilisation sensiblement optimale du chauffage peut correspondre à une différence de température moyenne d'environ 2° C entre jours de présence et jours d'absence et une différence de température moyenne d'environ 1° C entre jour et nuit (par exemple : période nocturne retenue comprise entre minuit et 5 heures du matin - uniquement prise en compte des températures horaires moyennes pour les pièces à vivre, à l'exclusion des chambres à coucher).

Dans le cas précité, on aboutit alors à la table logique suivante :

|  | $D_i < 8$ | $D_i > 8$ |
|---|---|---|
| $D_e < 3,5$ | Absence d'intermittence | Absence d'intermittence |
| $D_e > 3,5$ | Absence d'intermittence | - |

Ainsi, une recommandation de modification des habitudes de chauffage (à définir en fonction du ou des paramètre(s) non vérifié(s)) ne sera émise que lorsque la valeur de l'un au moins des deux paramètres $D_i$ et $D_e$ est inférieure à une valeur seuil $S_i$, $S_e$ prédéterminée respectivement correspondante, par exemple $S_i = 8$ et $S_e = 3,5$.

En accord avec une autre caractéristique de l'invention et en vue de prendre en compte les conditions locales externes, le procédé peut aussi consister à prendre en compte également une mesure de la valeur de la température extérieure $T_{ext}$ du lieu d'implantation du logement 1 ou analogue, par exemple relevée par l'intermédiaire d'un capteur 8 adapté relié à la centrale d'alarme 5, fournie par une source d'informations locale, ou analogue, et à incorporer les valeurs relevées de température extérieure $T_{ext}$ aux données exploitées par le système de traitement 7.

Le capteur 8 peut, par exemple, être celui de la chaudière du bâtiment ou logement 1 ou d'une centrale météorologique de l'utilisateur.

Dans le cadre d'un perfectionnement possible de l'invention permettant d'intégrer dans l'évaluation les divers apports thermiques extérieurs, il peut être prévu de réaliser un filtrage des données collectées basé sur la prise en compte de l'inertie thermique de la partie du bâtiment intégrant le logement 1 ou du bâtiment d'habitation constituant le logement 1.

Avantageusement, ce filtrage de données peut consister à écarter, c'est-à-dire à ne pas prendre en compte dans le traitement, les données recueillies durant une période de base $P_j$ donnée, par exemple un jour, durant laquelle la température extérieure moyenne $T_{em}$ est nettement différente, c'est-à-dire nettement supérieure ou inférieure, à la température extérieure moyenne $T_{em}$ mesurée durant des périodes de base similaires $P_{j-1}$, $P_{j+1}$ immédiatement précédant ou suivant ladite période donnée $P_j$.

Plus concrètement, le filtrage précité est basé sur la persistance de la rigueur du climat et peut, par exemple, écarter (de l'exploitation) les données pour les jours froids compris entre deux jours doux (par exemple des jours pour lesquels la température moyenne est supérieure à 13° C).

Un tel filtrage, en améliorant la pertinence de l'exploitation des données effectuée par le système 7, évite l'émission de recommandations erronées (par exemple recommandations consécutives contraires en l'absence de modification de l'utilisation du chauffage).

Afin d'appréhender l'amélioration de la pertinence de l'évaluation et donc de ses résultats, les inventeurs ont effectué des essais de vérification sur une période d'observation du 1$^{er}$ octobre au 15 mars et sur la base du calcul des distances moyenne $D_i$ et euclidienne $D_e$ de profils de températures horaires moyennes établis, d'une part, sur la totalité de la période d'observation (illustration de la figure 6) et, d'autre part, pour des fractions de cette période (donnant chacune lieu à une évaluation et à une recommandation séparées), ce pour un logement 1 déterminé.

Les résultats comparatifs avec et sans filtrage sont résumés dans le tableau ci-dessous :

| Envoi de message | | |
|---|---|---|
| Date | Sans filtrage | Avec filtrage |
| 1/10 - 15/10 | Absence d'intermittence | - |
| 10/10 - 1/11 | - | - |
| 24/10 - 15/11 | - | - |
| 12/11 - 1/12 | Absence d'intermittence | - |
| 27/11 - 15/12 | Absence d'intermittence | Absence d'intermittence |
| 15/12 - 1/1 | - | - |
| 18/12 - 15/1 | - | - |
| 16/1 - 1/2 | - | - |
| 29/1 - 15/2 | - | - |
| 12/2 - 1/3 | Absence d'intermittence | - |
| 28/2 - 15/3 | - | - |

Dans le cadre d'un développement supplémentaire de l'invention, visant un niveau de service fournissant à l'utilisateur directement une solution concrète pour améliorer au mieux son utilisation du chauffage et/ou de la climatisation, le procédé peut consister à délivrer, après exploitation par le système de traitement 7 des données collectées pendant la durée d'observation, des propositions d'optimisation de la consommation d'énergie sous la forme d'une ou de plusieurs suggestions de programmation d'intermittences et/ou de variations de niveau de chauffage ou de climatisation pour une période de base $P_j$ (préférentiellement 24 heures), le cas échéant fonction des priorités fixées entre, par exemple, le confort des occupants et l'économie d'énergie.

L'exploitation précitée peut notamment consister à réaliser une analyse statistique qui corrèle les profils de température Pp, $P_a$ et d'occupation établis sur une période donnée, par exemple glissante ou écoulée depuis une dernière évaluation, puis à délivrer les propositions d'optimisation à l'utilisateur ou aux occupants.

Ce développement vise plus particulièrement les logements 1 ou bâtiments dont les moyens de chauffage et/ou de climatisation sont munis de programmateurs ou analogues, en aidant notamment à optimiser les relances de chauffage ou de refroidissement (par exemple : détermination de l'heure idéale de relance après des absences ou après la période nocturne).

Pour pouvoir fournir cette fonctionnalité perfectionnée, le procédé peut consister avantageusement à exploiter, sous forme de simulation, au niveau de l'unité de traitement 7, un modèle thermique simplifié du logement 1 ou du bâtiment analogue paramétré par l'intermédiaire de caractéristiques effectives, notamment thermiques, géométriques, constructives et énergétiques dudit logement 1 ou analogue et alimenté par les données collectées, et éventuellement filtrées, durant une ou plusieurs période(s) d'observation, pour délivrer au moins une proposition de programmation des niveaux de chauffage ou de climatisation par plage horaire, ou semi-horaire, pour une période de base ($P_j$), préférentiellement journalière.

Un tel modèle de simulation peut notamment, dans le cadre du procédé, servir à :

- déterminer l'inertie réelle du bâtiment et donc préciser la programmation des intermittences à conseiller ;
- calculer l'économie "réelle" de chauffage en reconstituant la consommation de référence du logement en l'absence d'optimisation à partir de la connaissance des variables externes (en particulier des variables climatiques et d'occupation du logement).

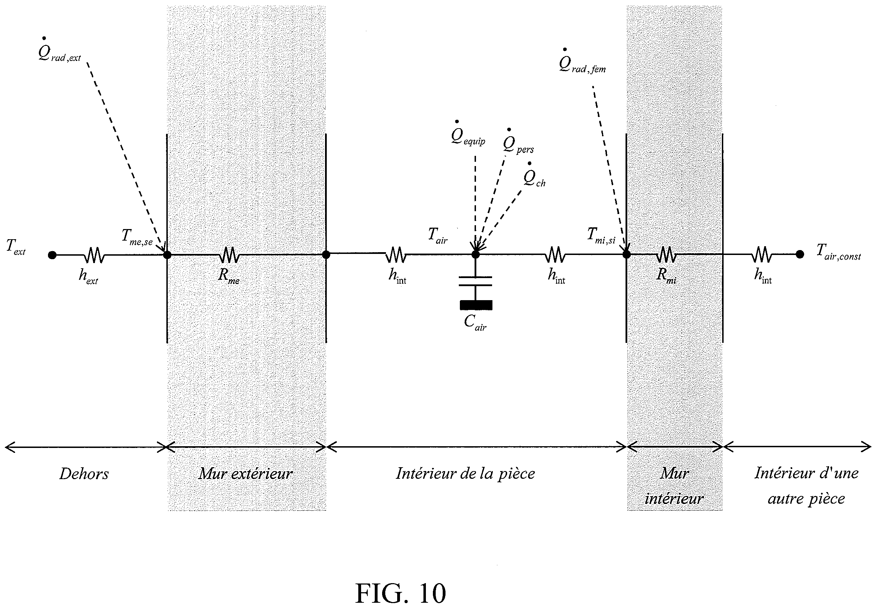

Afin de pouvoir mettre en oeuvre le modèle thermique simplifié, tel que par exemple celui représenté figure 10, il y a lieu de le paramétrer (paramétrage à distance) à l'aide des caractéristiques du logement 1 ou analogue et de données de mesure pouvant être recueillies dans le temps au niveau dudit logement 1.

A cet effet, et en plus des mesures de températures internes, les données collectées, transmises au système de traitement 7 exploitant le modèle de simulation thermique renseigné, comprennent également des mesures de la

température extérieure $T_{ext}$ et du rayonnement solaire $R_s$, fournies par des capteurs 8, 9 correspondants installés au niveau du logement 1 ou analogue ou par des sources d'informations météorologiques locales quotidiennes, et éventuellement des mesures de l'état thermique de la structure du logement 1 ou bâtiment analogue, par exemple fournies par au moins un capteur 10 de la température des murs, et/ou des mesures de la puissance de chauffage et/ou de climatisation, moyenne et/ou instantanée. Le paramétrage du modèle de simulation exploité est avantageusement effectué, d'une part, sur la base de renseignements fournis par l'utilisateur et transmis à l'unité de traitement 7, par exemple sous la forme d'un formulaire descriptif à renseigner et, d'autre part, sur la base de données collectées dans des conditions de test, notamment de pilotage spécifique des moyens de chauffage et/ou de climatisation.

A titre complémentaire, le procédé peut aussi consister à déterminer, au niveau du système distant 7, une évaluation des économies d'énergie réalisées en suivant les recommandations, par rapport à une consommation estimée en l'absence d'application desdites recommandations.

Un exemple simple de modélisation d'un logement 1 est représenté sur la figure 10. Il s'agit, en l'occurrence, d'un studio situé à Strasbourg comprenant un mur avec une fenêtre dirigée vers l'ouest et d'une superficie de 25 m². Les autres murs, ainsi que le plafond et le plancher, sont supposés être partagés avec d'autres logements adjacents, supposés être à une température fixe (par exemple 21° C) et le chauffage est de nature convective (avec des coefficients de convection externe et interne communs).

En outre, les apports thermiques internes ont été quantifiés (100 W par personne présente / 200 W pour les équipements électriques).

Sur le modèle représenté figure 10, les paramètres suivants sont représentés :

- $R_{me}$ : déperditions thermiques vers l'extérieur (fenêtre, infiltrations d'air, ventilation) ;
- $R_{mi}$ : déperditions thermiques vers les autres logements adjacents ;
- $T_{ext}$ : température extérieure;
- $Q_{rad\_ext}$ : flux de radiation solaire $R_s$ qui frappe la paroi extérieure de l'immeuble;
- $Q_{equip}$ : flux de chaleur dégagé par les équipements électroniques ;
- $Q_{pers}$ : flux de chaleur dégagé par les personnes ;
- $Q_{ch}$ : flux de chaleur provenant du chauffage ;
- $Q_{rad\_fen}$ : flux de radiation solaire qui frappe les parois internes à travers la fenêtre.

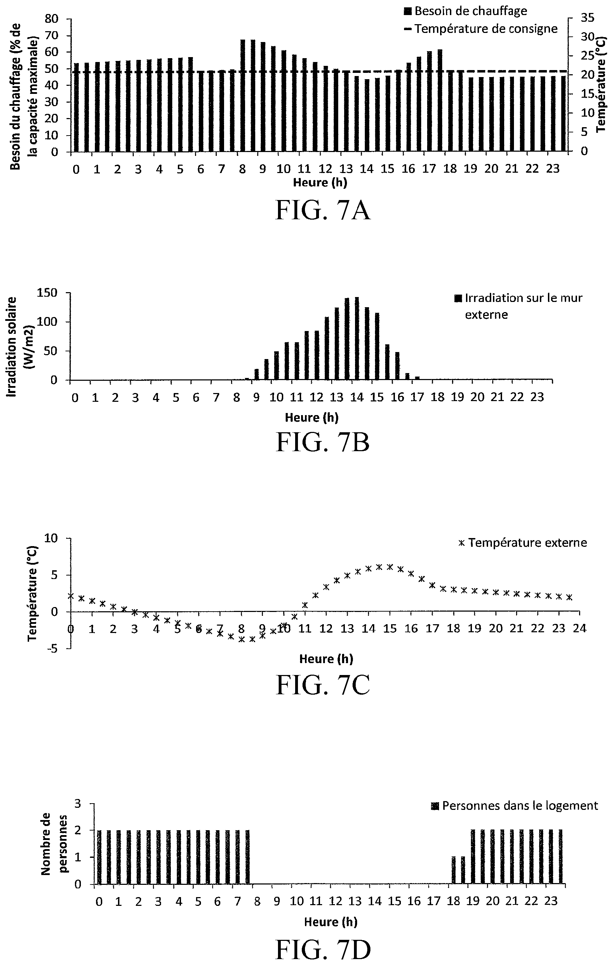

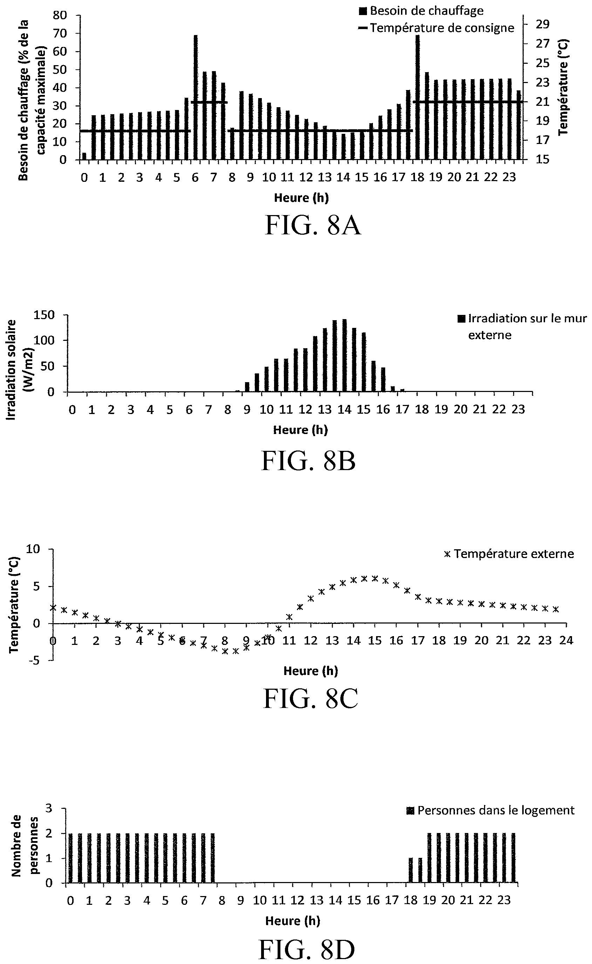

Des propositions de programmation de chauffage optimisées, élaborées en mettant en oeuvre le modèle thermique simplifié et renseigné représenté figure 10, sont illustrées sur les figures 7A et 8A, avec prise en compte de l'irradiation (figures 7B et 8B), de la température externe (figures 7C et 8C) et de l'occupation du logement (figures 7D et 8D), et en relation avec les conditions suivantes :

- figure 7A : température de consigne constante et élevée ;
- figure 8A : température de consigne variable (intermittence en cas d'absence et intermittence nocturne).

Les inventeurs ont remarqué qu'un paramètre extérieur influençant de manière notable les besoins en chauffage était l'irradiation solaire (sur le mur extérieur, à travers la fenêtre).

Lorsqu'aucun capteur 9 adapté n'est disponible au niveau du logement 1, l'irradiation solaire peut être estimée indirectement à partir des données météorologiques journalières ou mensuelles locales, en particulier des températures minimales et maximales (voir par exemple : Hargreaves G.H. "Simplified coefficients for estimating monthly solar radiation in North America and Europe" ("Coefficients simplifiés pour estimer mensuellement le rayonnement solaire en Amérique du Nord et en Europe"), Departmental Paper, Department of Biological and Irrigation Engineering, Utah State University, Logan, 1994).

D'autres exemples de modèles thermiques simplifiés d'un logement 1 et leur paramétrage par réalisation de tests adaptés (pilotage du chauffage et collecte des données mesurées) sont divulgués dans les publications suivantes : Bacher, P. and H. Madsen "Identifying suitable models for the heat dynamics of buildings" ("Identification de modèles adaptés de la dynamique de la chaleur dans des bâtiments"), Energy and Buildings 43.2011 : 1511-1522 et Balan, R. et al. "Parameter identification and model prédictive control of temperature inside a house" ("Identification de paramètres et modèle de contrôle prédictif à l'intérieur d'une maison"), Energy and Buildings 43. 2011 : 748-758.

Préférentiellement, les résultats du traitement et/ou les propositions d'optimisation de la consommation d'énergie sont mis à disposition de l'utilisateur par l'intermédiaire d'un serveur 11 Internet (non déposé) et/ou d'application mobile, consultable par l'utilisateur, par exemple après souscription au service correspondant.

Par ailleurs, il peut être avantageusement prévu de réitérer les opérations de collecte de traitement de données et de mise à disposition de résultats, de recommandations et/ou de propositions d'optimisation, pendant plusieurs périodes d'observation réparties sur l'année, en particulier au moins une en saison d'hiver et au moins une en saison d'été.

Comme cela ressort des développements précédents, le procédé selon l'invention peut être décliné en plusieurs variantes, plus ou moins sophistiquées en fonction du niveau de service rendu.

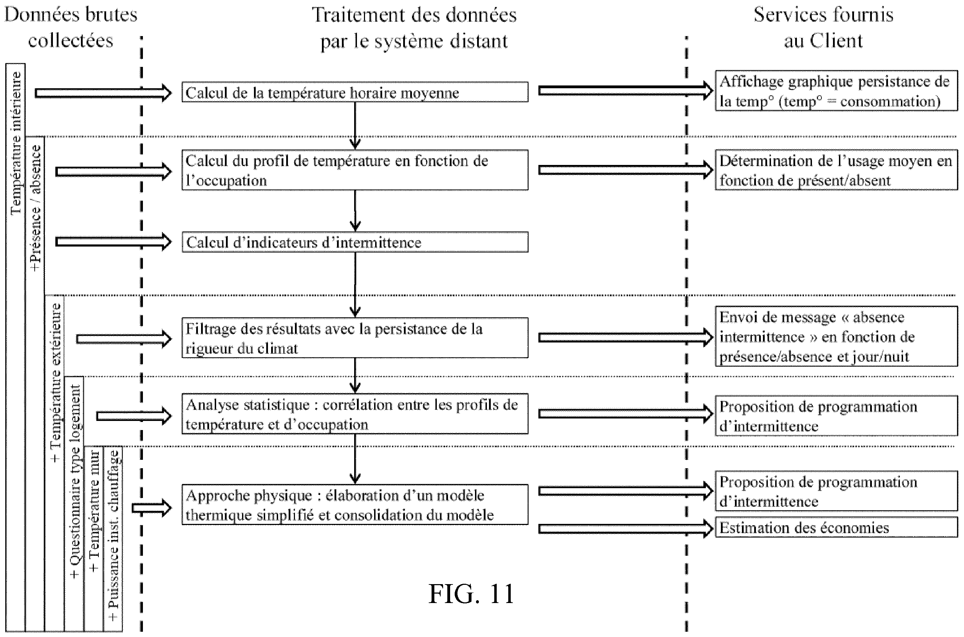

Ainsi, en résumé et comme l'illustre la figure 11, le procédé consiste, en plus des calculs de profils de température Pp, $P_a$ et d'une détermination de l'usage moyen du chauffage et/ou de la climatisation en fonction de l'occupation du logement ou de la pièce considéré(e), à réaliser une ou plusieurs des opérations suivantes en fonction des données supplémentaires collectées :

- en cas de prise en compte de la température extérieure : filtrage des résultats, par élimination sélective ou ajustement, en fonction de la persistance de la rigueur du climat local, et envoi de messages à l'utilisateur ou aux occupants tenant compte de l'occupation et de l'intermittence jour / nuit;
- en cas de fourniture de données relatives aux caractéristiques du logement ou de l'habitation : analyse statistique avec corrélation entre les profils de température et d'occupation, et soumission à l'utilisateur ou aux occupants d'une proposition de programmation d'intermittence ;
- en cas de fourniture de données relatives à la puissance de l'installation de chauffage/climatisation et de données concernant la température des murs : élaboration d'un modèle thermique simplifié du logement ou de l'habitation et consolidation de ce modèle au fur et à mesure des évaluations consécutives, ainsi qu'émission de propositions de programmation et d'estimation des économies.

Ainsi, l'invention permet, comme l'illustre la figure 11, en s'appuyant sur la mesure et l'enregistrement de la température intérieure, de calculer une température horaire moyenne et de restituer à l'utilisateur la persistance de la température intérieure.

L'intégration à cette première analyse de l'information d'occupation du logement issue du système d'alarme (absent / présent) permet d'établir le profil de température du logement en fonction de l'occupation. Ce profil de température est ensuite croisé avec les températures de référence recommandées par les Organismes officiels, tels que l'ADEME. Cette corrélation permet à l'utilisateur de déterminer le niveau d'usage moyen du chauffage selon le degré d'occupation.

L'exploitation d'un historique de températures intérieures à l'aide des formules de $D_i$ et de De et en se basant sur une période glissante, permet d'obtenir des indicateurs d'intermittences de l'usage du chauffage. La corrélation entre ces indicateurs et l'occupation du logement permet d'établir la présence ou l'absence d'intermittences de l'usage du chauffage en fonction de la présence ou l'absence de l'occupant.

La modification des seuils des indicateurs dans une table logique de détection de l'intermittence en fonction du moment de la journée (jour / nuit), permet d'établir la présence ou l'absence d'intermittences de l'usage du chauffage en fonction de la période diurne ou nocturne.

A cette exploitation mathématique, l'intégration de la température extérieure permet de filtrer les résultats initialement obtenus en prenant en compte la persistance de la rigueur du climat local.

De ce fait, cette analyse mathématique consolidée par un filtrage des résultats permet d'émettre à l'utilisateur des messages d'informations en cas d'absence intermittence de l'usage du chauffage à la fois en fonction des périodes d'occupation du logement mais également en fonction des périodes diurne et nocturne.

En intégrant les caractéristiques du logement (surface, orientation, ...) acquises à l'aide d'un questionnaire rempli par l'utilisateur, à l'ensemble des données déjà à disposition (température intérieure et extérieur, occupation), il est possible de réaliser une analyse statistique qui corrèle les profils de température et d'occupation. Cette analyse statistique permet d'émettre des propositions de programmation d'intermittence de l'usage du chauffage.

L'enrichissement de cet ensemble de données par la mesure de la température des murs et la puissance instantanée d'usage du chauffage, permet d'établir un modèle thermique simplifié du logement, par exemple selon les méthodes de Balan et al. ("Parameter identification and model prédictive control of temperature inside a house", Energy and Buildings 43. 2011 : 748-758) et Bacher et Madsen ("Identifying suitable models for the heat dynamics of buildings", Energy and Buildings 43. 2011 : 1511-1522).

Ce modèle thermique du logement permet non seulement d'émettre des propositions de programmation d'intermittence de l'usage du chauffage, mais également de calculer l'économie "réelle" de chauffage en reconstituant la consommation de référence du logement en l'absence d'optimisation et en la comparant à la consommation réelle.

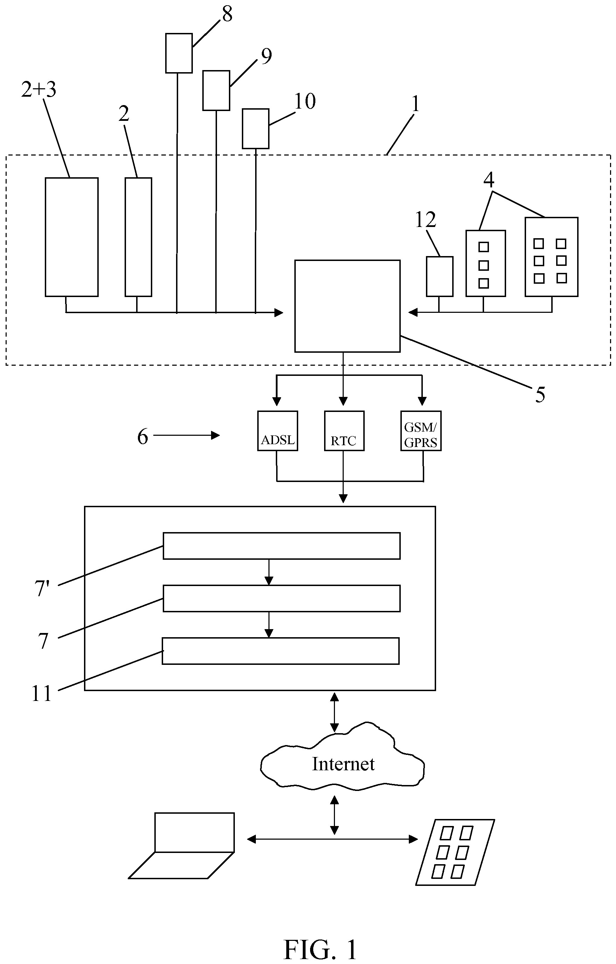

L'invention a également pour objet, comme illustré à titre d'exemple sur la figure 1, un ensemble pour la mise en oeuvre du procédé décrit ci-dessus.

Cet ensemble comprend, d'une part, un système local pour la collecte et la transmission de données de mesure ou de consigne au niveau de capteurs 2, de détecteurs 3 ou d'organes 4 de commande d'un logement 1 ou d'un bâtiment d'habitation analogue, d'autre part, au moins un moyen 6 de transfert de données et, enfin, au moins un système 7 distant de traitement des données collectées, associé à des moyens 7' d'intégration des données collectées et à des moyens 11 de mise à disposition des résultats du traitement.

Conformément à l'invention, cet ensemble est caractérisé :

en ce que le système local comprend des détecteurs de présence 3 incorporant des capteurs 2 de température de l'air, installés dans les différentes pièces de vie équipées d'un moyen de chauffage et/ou de climatisation, et une centrale d'alarme 5 ou analogue formant passerelle,

en ce que les moyens 6 de transfert de données, filaires ou sans fil, assurent un acheminement répété, à intervalles réguliers, des données collectées par un réseau de transmission public (ADSL, RTC, GSM, GPRS, ...),

et en ce que le système de traitement 7 est associé à une base de données 7' pour réaliser l'intégration des données collectées sur la période d'observation et à au moins un serveur 11 Internet et/ou d'application mobile pour la mise à disposition (portail, application) des résultats du traitement, sous forme d'une évaluation qualitative et performancielle, d'une recommandation de modification des habitudes de l'utilisateur, et/ou de proposition(s) d'optimisation de la consommation d'énergie.

Préférentiellement et de manière à permettre une mise en oeuvre optimale du procédé selon l'invention, il est prévu que le système local de collecte de données comprend également un capteur 8 de mesure de la température extérieure $T_{ext}$ au niveau du lieu du logement 1 ou du bâtiment analogue et, le cas échéant, au moins un capteur supplémentaire choisi dans le groupe formé par : un capteur 9 de mesure d'ensoleillement, un capteur 10 de mesure de l'état thermique de la structure du logement 1 ou bâtiment analogue et un capteur 12 de mesure de la puissance de chauffage ou de climatisation.

Le système d'alarme intégrant la centrale 5 formant passerelle et les détecteurs 3 équipés de capteurs 2 peut, par exemple, être du type connu sous la désignation "Birdie" par la demanderesse. Les autres moyens matériels mis en oeuvre par l'invention sont bien connus de l'homme du métier et ne nécessite pas davantage de description.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1.  Procédé pour l'indication, l'évaluation et l'optimisation des consommations d'énergie pour le chauffage et/ou la climatisation d'un logement ou d'un bâtiment d'habitation analogue, ledit logement ou analogue étant pourvu, préférentiellement dans chaque pièce de vie, d'un moyen de chauffage et/ou de climatisation, de capteurs de température et de détecteurs de présence et/ou de mouvement et comportant des moyens de récupération et de transmission, préférentiellement de manière répétitive à intervalles réguliers, de données délivrées par les capteurs et les détecteurs précités, ainsi que par les organes de commande des moyens de chauffage et/ou de climatisation, ledit procédé consistant à mesurer la température de l'air, au moins pour certaines pièces, par l'intermédiaire de capteurs (2), à intégrer ensuite les données collectées au niveau des capteurs (2), des détecteurs (3) et des organes (4) sur au moins une période d'observation de plusieurs jours, préférentiellement de plusieurs semaines, et à les exploiter au niveau d'un système distant (7) de traitement, en particulier en réalisant une caractérisation des habitudes d'usage du chauffage et/ou de la climatisation et/ou au moins une analyse corrélative des différents types de données collectées simultanément, ledit procédé consistant à réaliser un traitement des données collectées au niveau du système distant (7) assurant leur exploitation, de manière à déterminer le niveau d'usage moyen du chauffage et/ou de la climatisation pour une pièce de vie donnée selon le degré d'occupation de cette dernière ou du logement (1) ou analogue, par exemple décliné en jours de présence et en jours d'absence, et,

    ledit procédé consistant à mettre à disposition de l'utilisateur ou de l'occupant les résultats du traitement, éventuellement associés à une évaluation qualitative et performancielle de l'utilisation de l'énergie, une recommandation de modification des habitudes de chauffage ou de climatisation et/ou des propositions d'optimisation de la consommation d'énergie, pour le logement (1) ou analogue concerné, ou pour au moins certaines des pièces de vie de ce dernier, préférentiellement avec prise en compte de critères de confort pour les occupants,

    procédé **caractérisé**

    **en ce qu'**il consiste à mesurer la température de l'air dans la ou les pièce(s) par l'intermédiaire de capteurs (2) qui sont intégrés dans des détecteurs (3) de présence et/ou de mouvement d'un système d'alarme ou de surveillance, et à récupérer et à transmettre, à intervalles réguliers, les données de température et de présence et/ou de mouvement fournies par les capteurs (2), les détecteurs (3) et/ou les organes (4), par l'intermédiaire d'une centrale d'alarme (5), de surveillance ou analogue formant passerelle et reliée, d'une part, aux détecteurs (3), capteurs (2) et organes (4) précités et, d'autre part, à des moyens (6) de transfert à distance, préférentiellement sécurisé vers le système distant (7) assurant l'exploitation des données collectées, et

    **en ce qu'**il consiste à établir par traitement au niveau du système (7) distant au moins deux profils différenciés ($P_p$, $P_a$) d'évolution de la température sur une période de base ou de référence, typiquement 24 heures, à partir des températures horaires moyennes $\left(T_i^p, T_i^a\right)$, par pièce et pour toutes les pièces équipées de détecteurs (3) et/ou de capteurs (2) connectés du logement (1) ou analogue, calculées sur la base des données collectées et affectées à l'un des deux profils ($P_p$, $P_a$) selon que la durée d'occupation de la pièce concernée, ou du logement (1) ou analogue dans sa totalité, est inférieure ou supérieure à une ou plusieurs valeur(s) seuil, ce en vue de la détermination précitée du niveau d'usage moyen par pièce de vie selon le degré d'occupation,

**en ce qu'**il consiste également à réaliser, au niveau du système de traitement (7) et sur la base des températures horaires moyennes $\left(T_i^p, T_i^a\right)$, une analyse des habitudes de chauffage et/ou de climatisation pour chaque pièce équipée, ce en calculant les valeurs des deux paramètres suivants :

$$D_i = \sum_{i=1}^{24} (T_i^p - T_i^a) \text{ et } D_e = \sqrt{\sum_{i=1}^{24}(T_i^p - T_i^a)^2},$$

avec $D_i$ = distance moyenne, $D_e$ = distance euclidienne, i = numéro de la tranche horaire, $T_i^p$ = température horaire moyenne pour la i$^{ème}$ tranche horaire pendant les jours de présence durant la période d'observation et $T_i^a$ température horaire moyenne pour la i$^{ème}$ tranche horaire pendant les jours d'absence durant la période d'observation, et, en ce qu'il consiste à émettre une recommandation de modification des habitudes de chauffage lorsque la valeur de l'un des deux paramètres ($D_i$ et $D_e$) au moins est inférieure à une valeur seuil ($S_i$, $S_e$) prédéterminée respectivement correspondante, par exemple $S_i$ = 8 et $S_e$ = 3,5.

2. Procédé selon la revendication 1, **caractérisé en ce qu'**il consiste, à l'aide de températures horaires moyennes $\left(T_i^p, T_i^a\right)$ calculées sur la période d'observation à partir des données collectées et traitées, à mettre en évidence la persistance des consommations d'énergie durant des phases temporelles d'inoccupation du logement (1) ou analogue et/ou de chaque ou certaines pièce(s) de vie de ce dernier.

3. Procédé selon l'une quelconque des revendications 1 et 2, **caractérisé en ce qu'**il consiste à mettre en évidence, sur la base des données collectées, une différence d'usage du chauffage et/ou de la climatisation entre les périodes diurnes et nocturnes, ce pour chaque pièce de vie équipée d'un capteur (2) connecté, incorporé ou non à un détecteur (3),

4. Procédé selon l'une quelconque des revendications 1 à 3, **caractérisé en ce qu'**il consiste à prendre en compte également une mesure de la valeur de la température extérieure ($T_{ext}$) du lieu d'implantation du logement (1) ou analogue, par exemple relevée par l'intermédiaire d'un capteur (8) adapté relié à la centrale d'alarme (5), fournie par une source d'informations locale, ou analogue, et à incorporer les valeurs relevées de température extérieure ($T_{ext}$) aux données exploitées par le système de traitement (7).

5. Procédé selon l'une quelconque des revendications 1 à 4, **caractérisé en ce qu'**il comprend la réalisation d'un filtrage des données collectées basé sur la prise en compte de l'inertie thermique de la partie du bâtiment intégrant le logement (1) ou du bâtiment d'habitation constituant le logement (1).

6. Procédé selon les revendications 4 et 5, **caractérisé en ce que** le filtrage de données consiste à écarter, c'est-à-dire à ne pas prendre en compte dans le traitement, les données recueillies durant une période de base ($P_j$) donnée, par exemple un jour, durant laquelle la température extérieure moyenne ($T_{em}$) est nettement différente, c'est-à-dire nettement supérieure ou inférieure, à la température extérieure moyenne ($T_{em}$) mesurée durant des périodes de base similaires ($P_{j-1}$, $P_{j+1}$) immédiatement précédant ou suivant ladite période donnée ($P_j$).

7. Procédé selon l'une quelconque des revendications 1 à 6, **caractérisé en ce qu'**il consiste à délivrer, après exploitation par le système de traitement (7) des données collectées pendant la durée d'observation, des propositions d'optimisation de la consommation d'énergie sous la forme d'une ou de plusieurs suggestions de programmation d'intermittences et/ou de variations de niveau de chauffage ou de climatisation pour une période de base ($P_j$), le cas échéant fonction des priorités fixées entre, par exemple, le confort des occupants et l'économie d'énergie.

8. Procédé selon la revendication 7, **caractérisé en ce qu'**il consiste à réaliser une analyse statistique qui corrèle les profils de température ($P_p$, $P_a$) et d'occupation établis sur une période donnée, par exemple glissante ou écoulée depuis une dernière évaluation, puis à délivrer les propositions d'optimisation à l'utilisateur ou aux occupants.

9. Procédé selon la revendication 7 ou 8, **caractérisé en ce qu'**il consiste à exploiter, sous forme de simulation, au niveau de l'unité de traitement (7), un modèle thermique simplifié du logement (1) ou du bâtiment analogue paramétré par l'intermédiaire de caractéristiques effectives, notamment thermiques, géométriques, constructives et énergétiques dudit logement (1) ou analogue et alimenté par les données collectées, et éventuellement filtrées, durant une ou plusieurs période(s) d'observation, pour délivrer au moins une proposition de programmation des niveaux de chauffage ou de climatisation par plage horaire, ou semi-horaire, pour une période de base ($P_j$), préférentiellement journalière.

10. Procédé selon l'une quelconque des revendications 7 à 9, **caractérisé en ce que** les données collectées, transmises au système de traitement (7) exploitant le modèle de simulation thermique renseigné, comprennent également des mesures de la température extérieure ($T_{ext}$) et du rayonnement solaire ($R_s$), fournies par des capteurs (8, 9) installés au niveau du logement (1) ou analogue ou par des sources d'informations météorologiques locales quotidiennes, et éventuellement des mesures de l'état thermique de la structure du logement (1) ou bâtiment analogue, par exemple fournies par au moins un capteur (10) de la température des murs, et/ou des mesures de la puissance de chauffage et/ou de climatisation, moyenne et/ou instantanée, le paramétrage du modèle de simulation exploité étant avantageusement effectué, d'une part, sur la base de renseignements fournis par l'utilisateur et transmis à l'unité de traitement (7), par exemple sous la forme d'un formulaire descriptif à renseigner et, d'autre part, sur la base de données collectées dans des conditions de test, notamment de pilotage spécifique des moyens de chauffage et/ou de climatisation.

11. Procédé selon l'une quelconque des revendications 9 et 10, **caractérisé en ce qu'**il consiste à déterminer, au niveau du système distant (7), une évaluation des économies d'énergie réalisées en suivant les recommandations, par rapport à une consommation estimée en l'absence d'application desdites recommandations.

12. Procédé selon l'une quelconque des revendications 1 à 11, **caractérisé en ce que** les résultats du traitement et/ou les propositions d'optimisation de la consommation d'énergie sont mis à disposition de l'utilisateur ou des occupants par l'intermédiaire d'un serveur (11) Internet et/ou d'application mobile, consultable par l'utilisateur, par exemple après souscription au service correspondant et **en ce qu'**il consiste à réitérer les opérations de collecte de traitement de données et de mise à disposition de résultats, de recommandations et/ou de propositions d'optimisation, pendant plusieurs périodes d'observation réparties sur l'année, en particulier au moins une en saison d'hiver et au moins une en saison d'été.

13. Procédé selon l'une quelconque des revendications 1 à 12, **caractérisé en ce qu'**il consiste, en plus des calculs de profils de température ($P_p$, $P_a$) et d'une détermination de l'usage moyen du chauffage et/ou de la climatisation en fonction de l'occupation du logement ou de la pièce considéré(e), à réaliser une ou plusieurs des opérations suivantes en fonction des données supplémentaires collectées :

   - en cas de prise en compte de la température extérieure : filtrage des résultats, par élimination sélective ou ajustement, en fonction de la persistance de la rigueur du climat local, et envoi de messages à l'utilisateur ou aux occupants tenant compte de l'occupation et de l'intermittence jour / nuit;
   - en cas de fourniture de données relatives aux caractéristiques du logement ou de l'habitation : analyse statistique avec corrélation entre les profils de température et d'occupation, et soumission à l'utilisateur ou aux occupants d'une proposition de programmation d'intermittence ;
   - en cas de fourniture de données relatives à la puissance de l'installation de chauffage/climatisation et de données concernant la température des murs : élaboration d'un modèle thermique simplifié du logement ou de l'habitation et consolidation de ce modèle au fur et à mesure des évaluations consécutives, ainsi qu'émission de propositions de programmation et d'estimation des économies.

14. Ensemble pour la mise en oeuvre du procédé selon l'une quelconque des revendications 1 à 13 et comprenant, d'une part, un système local pour la collecte et la transmission de données de mesure ou de consigne au niveau de capteurs, de détecteurs ou d'organes de commande d'un logement ou d'un bâtiment d'habitation analogue, d'autre part, au moins un moyen de transfert de données et, enfin, au moins un système distant de traitement des données collectées, associé à des moyens d'intégration des données collectées et à des moyens de mise à disposition des résultats du traitement,
ensemble **caractérisé**
**en ce que** le système local comprend des détecteurs de présence d'un système d'alarme ou de surveillance (3) incorporant des capteurs (2) de température de l'air, installés dans les différentes pièces de vie équipées d'un moyen de chauffage et/ou de climatisation, et une centrale d'alarme (5) ou analogue formant passerelle,
**en ce que** les moyens (6) de transfert de données, filaires ou sans fil, assurent un acheminement répété, à intervalles réguliers, des données collectées par un réseau de transmission public vers le système de traitement (7) distant, apte et destiné, à partir des températures horaires moyennes ($T_i^p$ - $T_i^a$) relevées, d'une part, à établir au moins deux profils différenciés ($P_p$, $P_a$) d'évolution de la température sur une période de base ou de référence et, d'autre part, à calculer des paramètres de distance ($D_i$ et $D_e$) selon les formules de la revendication 1 et à les comparer à des valeurs seuil ($S_i$, $S_e$), ce pour chaque pièce équipée d'un capteur (2) et d'un détecteur (3), et **en ce que** le système de traitement (7) est associé à une base de données (7') pour réaliser l'intégration des données collectées sur la période d'observation et à au moins un serveur (11) Internet et/ou d'application mobile pour la mise à disposition de l'utilisateur ou des occupants des résultats du traitement, sous forme d'une évaluation qualitative et performancielle, d'une recommandation de modification des habitudes de l'utilisateur, et/ou de proposition(s) d'optimisation de la consommation d'énergie.

15. Ensemble selon la revendication 14, **caractérisé en ce que** le système local de collecte de données comprend également un capteur (8) de mesure de la température extérieure ($T_{ext}$) au niveau du lieu du logement (1) ou du bâtiment analogue et, le cas échéant, au moins un capteur supplémentaire choisi dans le groupe formé par : un capteur (9) de mesure d'ensoleillement, un capteur (10) de mesure de l'état thermique de la structure du logement (1) ou bâtiment analogue et un capteur (12) de mesure de la puissance de chauffage ou de climatisation.

**Patentansprüche**

1. Verfahren zur Angabe, Bewertung und Optimierung des Energieverbrauchs für die Heizung und/oder die Klimatisierung einer Wohnung oder eines ähnlichen Wohngebäudes, wobei die genannte Wohnung oder Ähnliches vorzugsweise in jedem Wohnraum mit einem Heiz- und/oder Klimatisierungsmittel, mit Temperatursensoren und Anwesenheits- und/oder Bewegungsmeldern versehen ist und Mittel zur Sammlung und Übertragung, vorzugsweise in regelmäßigen Abständen wiederholt, von Daten aufweist, die von den vorgenannten Sensoren und Meldern ausgegeben werden, sowie von den Organen zur Steuerung der Heiz- und/oder Klimatisierungsmittel,
wobei das genannte Verfahren darin besteht, die Lufttemperatur mindestens in bestimmten Räumen mit Hilfe der Sensoren (2) zu messen, dann die von den Sensoren (2), den Meldern (3) und den Organen (4) gesammelten Daten über mindestens einen Beobachtungszeitraum von mehreren Tagen, vorzugsweise von mehreren Wochen zu integrieren, und sie in einem fernen Verarbeitungssystem (7) auszuwerten, insbesondere durch Realisierung einer Charakterisierung der Gewohnheiten der Heizungs- und/oder Klimatisierungsnutzung und/oder mindestens einer korrelativen Analyse der verschiedenen Arten gleichzeitig gesammelter Daten,
wobei das genannte Verfahren darin besteht, eine Verarbeitung der gesammelten Daten im fernen System (7), das zu ihrer Auswertung dient, in der Weise vorzunehmen, dass das mittlere Heizungs- und/oder Klimatisierungs-Nutzungsniveau für einen gegebenen Wohnraum in Abhängigkeit von dessen Bewohnung oder der der Wohnung (1) oder Ähnlichem bestimmt wird, beispielsweise gesondert nach Anwesenheits- und Abwesenheitstagen, und
wobei das genannte Verfahren darin besteht, dem Nutzer oder Bewohner die Verarbeitungsergebnisse zur Verfügung zu stellen, gegebenenfalls in Verbindung mit einer qualitativen Effizienzeinschätzung der Energienutzung, einer Empfehlung zur Änderung der Heiz- oder Klimatisierungsgewohnheiten und/oder Vorschlägen zur Optimierung des Energieverbrauchs für die betreffende Wohnung (1) oder Ähnliches oder für mindestens bestimmte ihrer Wohnräume, vorzugsweise unter Berücksichtigung von Kriterien für den Komfort der Bewohner, Verfahren **dadurch gekennzeichnet,**
**dass** es darin besteht, die Lufttemperatur in dem oder den Wohnräumen mit Hilfe von Sensoren (2) zu messen, die in Anwesenheits- und/oder Bewegungsmeldern (3) eines Alarm- oder Überwachungssystems eingebaut sind, und in regelmäßigen Abständen die Temperatur- und Anwesenheits- und/oder Bewegungsdaten, die von den Sensoren (2), den Meldern (3) und/oder den Organen (4) ausgegeben werden, über eine Alarm-, Überwachungszentrale oder Ähnliches (5), die als Übergangsstelle dient und einerseits mit den vorgenannten Meldern (3), Sensoren (2) und Organen (4) verbunden ist und andererseits mit vorzugsweise gesicherten Fernübertragungsmitteln (6), zu sammeln und zum fernen System (7) zu übertragen, das die Auswertung der gesammelten Daten vornimmt, und dadurch, dass es darin besteht, durch Verarbeitung im fernen System (7) mindestens zwei unterschiedliche Profile ($P_p$, $P_a$) der Temperaturentwicklung über einen Basis- oder Bezugszeitraum, typischerweise von 24 Stunden, aus den Temperaturstundenmittelwerten ($T_i^p$, $T_i^a$) je Raum und für alle mit angeschlossenen Meldern (3) und/oder Sensoren (2) ausgestatteten Räumen der Wohnung (1) oder Ähnlichem, die aus den gesammelten und einem der beiden Profile ($P_p$, $P_a$), je nachdem ob die Bewohndauer des betreffenden Raumes oder der Wohnung (1) oder Ähnlichem als Ganzem geringer oder höher als ein oder mehrere Schwellenwert(e) ist, zugeordneten Daten berechnet werden, zu erstellen, und zwar mit dem Ziel der vorgenannten Bestimmung des mittleren Nutzungsniveaus je Wohnraum entsprechend dem Bewohnungsgrad,

dadurch, dass es auch darin besteht, im Verarbeitungssystem (7) und auf der Grundlage der Temperaturstundenmittelwerte ($T^p_i$, $T^a_i$) eine Analyse der Heiz- und/oder Klimatisierungsgewohnheiten für jeden ausgestatteten Raum zu erstellen, indem die Werte der beiden folgenden Parameter berechnet werden:

$$D_i = \sum\nolimits_{i=1}^{24} (T^p_i - T^a_i) \quad \text{und} \quad D_e = \sqrt{\sum\nolimits_{i=1}^{24} (T^p_i - T^a_i)^2}$$

worin $D_i$ = mittlerer Abstand, $D_e$ = euklidischer Abstand, i = Nummer des Zeitraumes, $T^p_i$ = Temperaturstundenmittelwert des i-ten Zeitraums in den Anwesenheitstagen im Beobachtungszeitraum, $T^a_i$ = Temperaturstundenmittelwert des i-ten Zeitraums in den Abwesenheitstagen im Beobachtungszeitraum, und dadurch, dass es darin besteht, eine Empfehlung zur Änderung der Heizgewohnheiten auszugeben, wenn der Wert mindestens eines der beiden Parameter ($D_i$ und $D_e$) geringer ist, als ein jeweils entsprechender vorgegebener Schwellenwert ($S_i$, $S_e$), z.B. $S_i = 8$ und $S_e = 3,5$.

2. Verfahren nach Patentanspruch 1, **dadurch gekennzeichnet, dass** es darin besteht, mit Hilfe von Temperaturstundenmittelwerten ($T^p_i$, $T^a_i$), die über den Beoachtungszeitraum aus gesammelten und verarbeiteten Daten berechnet werden, die Fortsetzung des Energieverbrauchs während Zeiträumen der Nichtbewohnung der Wohnung (1) oder Ähnlichem und/oder jedes oder bestimmter Wohnräume davon herauszustellen.

3. Verfahren nach irgendeinem der Patentansprüche 1 und 2, **dadurch gekennzeichnet, dass** es darin besteht, auf der Grundlage der gesammelten Daten einen Unterschied der Heizungs- und/oder Klimatisierungsnutzung zwischen Tag- und Nachtzeit herauszustellen, und zwar für jeden mit einem angeschlossenen Sensor (2), der in einen Melder (3) eingebaut sein kann oder nicht, ausgestatteten Wohnraum.

4. Verfahren nach irgendeinem der Patentansprüche 1 bis 3, **dadurch gekennzeichnet, dass** es darin besteht, ebenfalls eine Messung des Wertes der Außentemperatur ($T_{ext}$) des Ortes der Wohnung (1) oder Ähnlichem zu berücksichtigen, der beispielsweise mit Hilfe eines geeigneten Sensors (8) gemessen wird, der mit der Alarmzentrale (5) verbunden ist, aus einer lokalen Informationsquelle oder Ähnlichem stammt, und die ermittelten Werte der Außentemperatur ($T_{ext}$) den Daten hinzuzufügen, die vom Verarbeitungssystem (7) ausgewertet werden.

5. Verfahren nach irgendeinem der Patentansprüche 1 bis 4, **dadurch gekennzeichnet, dass** es die Ausführung einer Filterung der gesammelten Daten aufgrund der Berücksichtigung des Wärmeleitwiderstandes des Gebäudeteils, in dem sich die Wohnung (1) befindet, oder des Wohngebäudes, das die Wohnung (1) darstellt, umfasst.

6. Verfahren nach irgendeinem der Patentansprüche 4 und 5, **dadurch gekennzeichnet, dass** die Datenfilterung darin besteht, die Daten auszusondern, d.h. in der Verarbeitung nicht zu berücksichtigen, die während eines gegebenen Basiszeitraums ($P_j$), beispielsweise eines Tages, gesammelt wurden, in dem die mittlere Außentemperatur ($T_{em}$) erheblich abweicht, d.h. erheblich höher oder niedriger ist, als die mittlere Außentemperatur ($T_{em}$), die während ähnlicher, dem genannten gegebenen Zeitraum ($P_j$) unmittelbar vorangehender oder folgender Basiszeiträume ($P_{j-1}$, $P_{j+1}$) gemessen wurde.

7. Verfahren nach irgendeinem der Patentansprüche 1 bis 6, **dadurch gekennzeichnet, dass** es darin besteht, nach Auswertung durch das System (7) zur Verarbeitung der im Beobachtungszeitraum gesammelten Daten Vorschläge zur Optimierung des Energieverbrauchs in Form eines oder mehrerer Vorschläge zur Programmierung von Unterbrechungen und/oder Änderungen des Heizungs- oder Klimatisierungsniveaus für einen Basiszeitraum ($P_j$) auszugeben, gegebenenfalls in Abhängigkeit von Prioritäten, die beispielsweise zwischen dem Komfort der Bewohner und der Energieeinsparung gesetzt wurden.

8. Verfahren nach Patentanspruch 7, **dadurch gekennzeichnet, dass** es darin besteht, eine statistische Analyse auszuführen, die die Temperatur- und Bewohnungsprofile ($P_p$, $P_a$) korreliert, die über einen gegebenen Zeitraum erstellt wurden, beispielsweise einen gleitenden oder seit einer letzten Bewertung abgelaufenen, und dann dem Nutzer oder Bewohner die Optimierungsvorschläge auszugeben.

9. Verfahren nach Patentanspruch 7 oder 8, **dadurch gekennzeichnet, dass** es darin besteht, in Form einer Simulation in der Verarbeitungseinheit (7) ein vereinfachtes Wärmemodell der Wohnung (1) oder des ähnlichen Gebäudes auszuwerten, das über wirkende Merkmale der genannten Wohnung (1) oder Ähnlichem, insbesondere thermische, geometrische, konstruktive und energetische, parametriert und mit den während einer oder mehrerer Beobachtungszeiträume gesammelten und gegebenenfalls gefilterten Daten gefüttert wird, um mindestens einen Vorschlag zur Programmierung des Heiz- oder Klimatisierungsniveaus nach Stunden- oder Halbstundenintervallen für einen Basiszeitraum ($P_j$), vorzugsweise Tag, auszugeben.

10. Verfahren nach irgendeinem der Patentansprüche 7 bis 9, **dadurch gekennzeichnet, dass** die gesammelten Daten, die dem Verarbeitungssystem (7) übermittelt werden, das das ausgefüllte Simulationswärmemodell auswertet, ebenfalls Messwerte der Außentemperatur ($T_{ext}$) und der Sonneneinstrahlung ($R_s$) umfassen, die von Sensoren (8, 9) stammen, die in der Wohnung (1) oder Ähnlichem installiert sind, oder aus täglichen, lokalen Wetterberichtsquellen, und gegebenenfalls Messwerte des thermischen Zustandes der Struktur der Wohnung (1) oder des ähnlichen Gebäudes, die beispielsweise von mindestens einem Sensor (10) der Mauertemperatur stammen, und/oder Messwerte der Heiz- und/oder Klimatisierungsleistung, gemittelt und/oder momentan, wobei die Parametrierung des ausgewerteten Simulationsmodells vorteilhafterweise einerseits aufgrund von Auskünften durch den Nutzer erfolgt, die der Verarbeitungseinheit (7) übermittelt werden, beispielsweise in Form eines auszufüllenden Beschreibungsformulars, und andererseits aufgrund von Daten, die unter Testbedingungen insbesondere einer spezifischen Steuerung der Heiz- und/oder Klimatisierungsmittel gesammelt wurden.

11. Verfahren nach irgendeinem der Patentansprüche 9 und 10, **dadurch gekennzeichnet, dass** es darin besteht, im fernen System (7) eine Bewertung der Energieersparnis zu bestimmen, die durch Beachtung der Empfehlungen gegenüber einem geschätzten Verbrauch ohne die Anwendung der genannten Empfehlungen erreicht wird.

12. Verfahren nach irgendeinem der Patentansprüche 1 bis 11, **dadurch gekennzeichnet, dass** die Ergebnisse der Verarbeitung und/oder die Empfehlungen zur Optimierung des Energieverbrauchs dem Nutzer oder den Bewohnern über einen Internet- und/oder Mobilgeräteanwendungsserver (11) zur Verfügung gestellt werden und vom Nutzer beispielsweise nach Abonnement des entsprechenden Dienstes konsultiert werden können, und dadurch, dass es darin besteht, die Vorgänge zur Sammlung und Datenverarbeitung und Zurverfügungstellung von Ergebnissen, Empfehlungen und/oder Optimierungsvorschlägen während mehrerer über das Jahr verteilter Beobachtungszeiträume, insbesondere mindestens einem im Winter und einem im Sommer, wiederholt werden.

13. Verfahren nach irgendeinem der Patentansprüche 1 bis 12, **dadurch gekennzeichnet, dass** es darin besteht, zusätzlich zu den Berechnungen von Temperaturprofilen ($P_p$, $P_a$) und einer Bestimmung der mittleren Nutzung der Heizung und/oder Klimaanlage in Abhängigkeit von der Bewohnung der betrachteten Wohnung oder des betrachteten Raumes eine oder mehrere der folgenden Vorgänge in Abhängigkeit von den zusätzlich gesammelten Daten auszuführen:

- im Fall der Berücksichtigung der Außentemperatur: Filterung der Ergebnisse durch Aussonderung oder Berichtigung in Abhängigkeit vom Fortbestehen der Strenge des lokalen Klimas und Senden von Meldungen an den Nutzer oder die Bewohner, die die Bewohnung und den Tag-/Nachtwechsel berücksichtigen;
- im Fall der Angabe von Daten über Merkmale der Wohnung oder des Hauses: statistische Analyse mit Korrelation zwischen den Temperatur- und Bewohnungsprofilen und Erstellung eines Vorschlags zur Programmierung von Unterbrechungen für den Nutzer oder die Bewohner;
- im Fall der Angabe von Daten über die Leistung der Heizungs-/ Klimaanlage und von Daten über die Temperatur der Mauern: Ausarbeitung eines vereinfachten Wärmemodells der Wohnung oder des Hauses und Konsolidierung dieses Modells im Verlauf von folgenden Bewertungen, sowie Ausgabe von Programmierungsvorschlägen und Einsparungsschätzungen.

14. Anordnung zur Ausführung des Verfahrens nach irgendeinem der Patentansprüche 1 bis 13, einerseits ein lokales System zur Sammlung und Übertragung von Mess- oder Anweisungsdaten von Sensoren, Meldern oder Bedienungsorganen einer Wohnung oder eines ähnlichen Wohngebäudes umfassend, andererseits mindestens ein Datenübertragungsmittel und schließlich mindestens ein fernes System zur Verarbeitung der gesammelten Daten, in Verbindung mit Mitteln zur Integration der gesammelten Daten und mit Mitteln zur Zurverfügungstellung der Ergebnisse der Verarbeitung,
Anordnung, **dadurch gekennzeichnet,**
**dass** das lokale System Anwesenheitsmelder (3) eines Alarm- oder Überwachungssystems umfasst, die Lufttemperatursensoren (2) aufweisen, die in den verschiedenen Wohnräumen installiert sind, die mit einem Heiz- und/oder Klimatisierungsmittel ausgerüstet sind, und eine Alarmzentrale (5) oder Ähnliches, die als Übergangsstelle dient, dadurch, dass die Datenübertragungsmittel (6) auf Kabel- oder Funkbasis eine wiederholte Beförderung in regelmäßigen Abständen der gesammelten Daten über ein öffentliches Fernmeldenetz zum fernen Verarbeitungssystem (7) sicherstellen, das geeignet und dazu bestimmt ist, aus den ermittelten Temperaturstundenmittelwerten ($T^p_i$ - $T^a_i$) einerseits mindestens zwei unterschiedliche Profile ($P_p$, $P_a$) der Temperaturentwicklung über einen Basis- oder Bezugszeitraum zu erstellen und andererseits Entfernungsparameter ($D_i$ und $D_e$) nach den Formeln des Patentanspruches 1 zu berechnen und sie mit Schwellenwerten ($S_i$, $S_e$) zu vergleichen, und zwar für jeden Raum, der mit einem Sensor (2) und einem Melder (3) ausgestattet ist,
und dadurch, dass das Verarbeitungssystem (7) mit einer Datenbank (7') verbunden ist, um die Integration der gesammelten Daten über den Beobachtungszeitraum auszuführen, und mit mindestens einem Internet- und/oder Mobilgeräteanwendungsserver (11), um dem Nutzer oder den Bewohnern Verarbeitungsergebnisse in Form einer qualitativen Effizienzeinschätzung, einer Empfehlung zur Änderung der Gewohnheiten des Nutzers und/oder von Optimierungsvorschlägen für den Energieverbrauch zur Verfügung zu stellen.

**15.** Anordnung nach Patentanspruch 14, **dadurch gekennzeichnet, dass** das lokale System zur Datensammlung außerdem einen Sensor (8) zur Messung der Außentemperatur ($T_{ext}$) am Ort der Wohnung (1) oder des ähnlichen Gebäudes umfasst und gegebenenfalls mindestens einen zusätzlichen Sensor, ausgewählt aus der Gruppe, bestehend aus: Sonneneinstrahlungsmesssensor (9), Sensor (10) zur Messung des thermischen Zustands der Struktur der Wohnung (1) oder des ähnlichen Gebäudes und Sensor (12) zur Messung der Heiz- oder Klimatisierungsleistung.

**Claims**

**1.** Method for indicating, assessing and optimising energy consumption for the heating and/or the air conditioning in a dwelling or a like residential building, said dwelling or the like being provided, preferably in each habitable room, with a heating and/or air conditioning means, temperature sensors and presence and/or movement detectors and comprising means for retrieving and transmitting, preferably in a repetitive manner at regular intervals, data delivered by the aforementioned sensors and detectors, as well as by the control units of the heating and/or air conditioning means,
said method comprising measuring the air temperature, at least for certain rooms, by means of sensors (2), subsequently integrating the data collected from the sensors (2), detectors (3) and units (4) over at least one observation period of several days, preferably of several weeks, and using said data in a remote processing system (7), particularly by completing a characterisation of the usage habits of the heating and/or the air conditioning and/or at least one correlative analysis of the various types of simultaneously collected data,
said method comprising processing the collected data at the remote system (7) that uses said data, so as to determine the average usage level of the heating and/or the air conditioning in a given habitable room according to the level of occupancy thereof or of the dwelling (1) or the like, stated in days present and days absent, for example, and
said method comprising providing the user or the occupant with the results of the processing, possibly associated with a quantitative and performance-related assessment of energy use, a recommendation for modifying heating or air conditioning habits and/or proposals for optimising energy consumption for the relevant dwelling (1) or the like, or for at least certain habitable rooms thereof, preferably taking into account comfort criteria for the occupants,
said method is **characterised in that** it comprises measuring the air temperature in the one or more room(s) by means of sensors (2) that are integrated into presence and/or movement detectors (3) of an alarm or surveillance system, and retrieving and transmitting, at regular intervals, the temperature and presence and/or movement data provided by the sensors (2), the detectors (3) and/or the units (4) towards the remote system (7) that uses the collected data through an alarm unit (5), surveillance unit or the like that forms a gateway and is linked, on the one hand, to the aforementioned detectors (3), sensors (2) and units (4) and, on the other hand, to preferably secure, remote transfer means (6), and **in that**
it comprises establishing, through processing at the remote system (7), at least two differentiated profiles ($P_p$, $P_a$) of the evolution of the temperature over a base or reference period, typically 24 hours, on the basis of the average hourly temperatures $(\mathrm{T}^p_i, \mathrm{T}^a_i)$, per room and for all of the rooms equipped with detectors (3) and/or sensors (2) connected to the dwelling (1) or the like, that are computed on the basis of the data collected and assigned to one of the two profiles ($P_p$, $P_a$) as long as the duration of occupancy of the relevant room or of the dwelling (1) or the like, in its entirety, is less than or higher than one or more threshold value(s), with a view to the aforementioned determination of the average usage level per habitable room according to the level of occupancy,
**in that** it further comprises carrying out, at the processing system (7) and on the basis of the average hourly temperatures $(\mathrm{T}^p_i, \mathrm{T}^a_i)$, an analysis of the heating and/or air conditioning habits for each equipped room, by computing the values of the following two parameters:

$$D_i = \sum_{i=1}^{24} (T_i^p - T_i^a) \text{ and } D_e = \sqrt{\sum_{i=1}^{24} (T_i^p - T_i^a)^2},$$

with $D_i$ = average distance, $D_e$ = Euclidian distance, i = number of the time slot, $T_i^p$ = average hourly temperature for the $i^{th}$ time slot during the days present throughout the observation period and $T_i^a$ = average hourly temperature for the $i^{th}$ time slot during the days absent throughout the observation period, and **in that** it comprises issuing a recommendation for modifying heating habits when the value of one of the two parameters ($D_i$ and $D_e$) at least is less than a respectively corresponding predetermined threshold ($S_i$, $S_e$), for example $S_i = 8$ and $S_e = 3.5$.

2.   Method according to claim 1, **characterised in that** it comprises, using average hourly temperatures ($T_i^p$, $T_i^a$) computed over the observation period on the basis of the collected and processed data, highlighting the continuation of energy consumption during temporal phases of unoccupancy of the dwelling (1) or the like and/or of each or of certain habitable room(s) thereof.

3.   Method according to any one of claims 1 to 2, **characterised in that** it comprises highlighting, on the basis of the collected data, a difference in the usage of the heating and/or the air conditioning between the daytime and night-time periods, for each habitable room equipped with a connected sensor (2), whether or not it is incorporated in a detector (3).

4.   Method according to any one of claims 1 to 3, **characterised in that** it comprises also taking into account a measurement of the value of the outside temperature ($T_{ext}$) of the location of the dwelling (1) or the like, for example recorded by means of a suitable sensor (8) linked to the alarm unit (5), supplied by a local information source, or the like, and in incorporating the recorded outside temperature values ($T_{ext}$) into the data that is used by the processing system (7).

5.   Method according to any one of claims 1 to 4, **characterised in that** it comprises filtering the collected data based on the consideration of the thermal inertia of the part of the building that integrates the dwelling (1) or of the residential building that forms the dwelling (1).

6.   Method according to claims 4 and 5, **characterised in that** the data filtering comprises separating, i.e. not taking into account in the processing, the data gathered during a given base period ($P_j$), for example one day, during which the average outside temperature ($T_{em}$) is markedly different, i.e. markedly higher or lower, to the average outside temperature ($T_{em}$) measured during similar base periods ($P_{j-1}$, $P_{j+1}$) immediately preceding or following said given period ($P_j$).

7.   Method according to any one of claims 1 to 6, **characterised in that** it comprises delivering, after the processing system (7) has used the data collected during the observation period, proposals for optimising energy consumption in the form of one or more suggestions for programming frequencies and/or variations in the heating or the air conditioning level for a base period ($P_j$), where necessary according to priorities that are determined between the comfort of the occupants and energy savings, for example.

8.   Method according to claim 7, **characterised in that** it comprises carrying out a statistical analysis that correlates the temperature and occupancy profiles ($P_p$, $P_a$) established over a given period, for example rolling or elapsed since a last assessment, then delivering the optimisation proposals to the user or to the occupants.

9.   Method according to claim 7 or 8, **characterised in that** it comprises using, in the form of a simulation, at the processing unit (7), a simplified thermal model of the dwelling (1) or of the like building that is configured by means of actual characteristics, in particular thermal, geometric, constructive and energy characteristics, of said dwelling (1) or the like and is supplied by the data collected, and possibly filtered, during one or more observation period(s), in order to deliver at least one proposal for programming heating or air conditioning levels by hourly or half-hourly windows, for a preferably daily base period ($P_j$).

10.  Method according to any one of claims 7 to 9, **characterised in that** the collected data that is transmitted to the processing system (7) using the completed thermal simulation model further comprises measurements of the outside temperature ($T_{ext}$) and of the solar radiation ($R_s$) that are provided by sensors (8, 9) installed on the dwelling (1) or the like or by local daily metrological information sources, and possibly measurements of the thermal state of the structure of the dwelling (1) or of the like building, provided by at least one wall temperature sensor (10), for example, and/or measurements of the average and/or instantaneous heating and/or air conditioning power, the configuration of the simulation model that is used being advantageously carried out, on the one hand, on the basis of information supplied by the user and transmitted to the processing unit (7), for example in the form of a descriptive form to be completed and, on the other hand, on the basis of data collected under test conditions, particularly the specific control of the heating and/or air conditioning means.

11. Method according to any one of claims 9 to 10, **characterised in that** it comprises determining, at the remote system (7), an assessment of the energy savings made by following the recommendations, compared to an estimated consumption when said recommendations are not applied.

12. Method according to any one of claims 1 to 11, **characterised in that** the results of the processing and/or the proposals for optimising energy consumption are made available to the user or the occupants by means of an Internet server (11) and/or mobile application, which can be consulted by the user, for example, after subscribing to the corresponding service, and **in that** it comprises repeating the operations for collecting and processing data and for providing results, recommendations and/or optimisation proposals, over several observation periods divided over the year, particularly at least one in the winter season and at least one in the summer season.

13. Method according to any one of claims 1 to 12, **characterised in that** it comprises, in addition to the computations of temperature profiles ($P_p$, $P_a$) and to a determination of the average usage of the heating and/or the air conditioning according to the occupancy of the dwelling or the considered room(s), carrying out one or more of the following operations according to the additional collected data:

- in the case of taking into account the outside temperature: filtering the results, by selective elimination or adjustment, depending on the continuation of the severity of the local climate, and sending messages to the user or to the occupants taking into account the occupancy and the day/night frequency;
- in the case of supplying data relating to the characteristics of the dwelling or the residence: a statistical analysis with correlation between the temperature and occupancy profiles and submission to the user or to the occupants of a programming frequency proposal;
- in the case of supplying data relating to the power of the heating/air conditioning installation and data relating to the temperature of the walls: developing a simplified thermal model of the dwelling or the residence and consolidating this model upon consecutive assessments, as well as issuing proposals for programming and estimating savings.

14. Assembly for implementing the method according to any one of claims 1 to 13 and comprising, on the one hand, a local system for collecting and transmitting measurement or setpoint data at sensors, detectors or control units of a dwelling or like residential building and, on the other hand, at least one data transfer means and, finally, at least one remote system for processing collected data that is associated with means for integrating collected data and means for making available the results of the processing, which assembly is **characterised**
**in that** the local system comprises presence detectors of an alarm or surveillance system (3) incorporating air temperature sensors (2) installed in the various habitable rooms equipped with a heating and/or air conditioning means, and an alarm unit (5) or the like forming a gateway,
**in that** the wired or wireless data transfer means (6) provide repeated routing, at regular intervals, of the collected data via a public transmission network towards the remote processing system (7) that is designed and intended, on the basis of the recorded average hourly temperatures $(T_i^{p} - T_i^{a})$, to establish, on the one hand, at least two differentiated profiles ($P_p$, $P_a$) of the evolution of the temperature over a base or reference period and, on the other hand, to compute distance parameters (D; and $D_e$) according to the formulae of claim 1 and to compare them to threshold values ($S_i$, $S_e$) for each room equipped with a sensor (2) and a detector (3),
and **in that** the processing system (7) is associated with a database (7') for integrating the data collected over the observation period and with at least one Internet server (11) and/or mobile application for making the results of the processing available to the user or the occupants in the form of a qualitative and performance-related assessment, a recommendation for modifying the habits of the user and/or proposals for optimising energy consumption.

15. Assembly according to claim 14, **characterised in that** the local system for collecting data further comprises a sensor (8) for measuring the outside temperature ($T_{ext}$) at the location of the dwelling (1) or of the like building and, where necessary, at least one additional sensor selected from the group formed by: a sensor (9) for measuring sunlight, a sensor (10) for measuring the thermal state of the structure of the dwelling (1) or of the like building and a sensor (12) for measuring the heating or air conditioning power.

FIG. 1

Chauffage sans intermittence

Chauffage avec intermittence

FIG. 2A

FIG. 2B

FIG. 2

Client 125538 - Salle à manger

FIG. 3

FIG. 4

FIG. 5

FIG. 6

FIG. 7A

FIG. 7B

FIG. 7C

FIG. 7D

FIG. 8A

FIG. 8B

FIG. 8C

FIG. 8D

FIG. 9

FIG. 10

EP 2 781 976 B1

**Données brutes collectées**

**Traitement des données par le système distant**

**Services fournis au Client**

Température intérieure

+Présence / absence

+ Température extérieure

+ Questionnaire type logement

+ Température mur

+ Puissance inst. chauffage

Calcul de la température horaire moyenne → Affichage graphique persistance de la temp° (temp° = consommation)

Calcul du profil de température en fonction de l'occupation → Détermination de l'usage moyen en fonction de présent/absent

Calcul d'indicateurs d'intermittence

Filtrage des résultats avec la persistance de la rigueur du climat → Envoi de message « absence intermittence » en fonction de présence/absence et jour/nuit

Analyse statistique : corrélation entre les profils de température et d'occupation → Proposition de programmation d'intermittence

Approche physique : élaboration d'un modèle thermique simplifié et consolidation du modèle → Proposition de programmation d'intermittence

Estimation des économies

FIG. 11

# EP 2 781 976 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2011125329 A
- GB 2448896 A
- WO 2011121299 A

**Littérature non-brevet citée dans la description**

- **HARGREAVES G.H.** Simplified coefficients for estimating monthly solar radiation in North America and Europe. *Departmental Paper, Department of Biological and Irrigation Engineering,* 1994
- **BACHER, P. ; H. MADSEN.** Identifying suitable models for the heat dynamics of buildings. *Energy and Buildings,* 2011, vol. 43, 1511-1522
- **BALAN, R. et al.** Parameter identification and model prédictive control of temperature inside a house. *Energy and Buildings,* 2011, vol. 43, 748-758
- **BALAN et al.** Parameter identification and model prédictive control of temperature inside a house. *Energy and Buildings,* 2011, vol. 43, 748-758
- **BACHER ; MADSEN.** Identifying suitable models for the heat dynamics of buildings. *Energy and Buildings,* 2011, vol. 43, 1511-1522